# EUROPEAN PATENT APPLICATION

(11) **EP 3 399 624 A1**
(43) Date of publication of application: **07.11.2018**
(21) Application number: 17169082.9
(22) Date of filing: 02.05.2017
(51) Int. Cl.: H02J 50/10, H02J 50/90

(54) **METHOD FOR CONTROLLING A CHARGING DEVICE AND CHARGING DEVICE**

(71) Applicant: Braun GmbH, 61476 Kronberg im Taunus (DE)
(72) Inventor: Klemm, Torsten, 61476 Kronberg (DE); Jung, Philipp, 61476 Kronberg (DE); Hermann, Ferdinand, 61476 Kronberg (DE); Gübler, René, 61476 Kronberg (DE); Sebastian, Meyer, 61476 Kronberg (DE)
(74) Representative: Schneider, Stefan Michael

(57) **Abstract**

A method for controlling a charging device (10) and a respective charging device (10) transferring energy to an electrical load of an inductively coupled household appliance (20) are described, the circuitry of said charging device (10) comprising
- an oscillator circuit (1) having at least one output power coil element (2, L1) and one capacitor element (C1, C2);
- an electrical power source;
- a power switching element (7, T1) feeding the oscillator circuit with electrical power;
- a sensor element (6) for determining an electrical signal value indicative of the inductance of the oscillator circuit (1);
- a microprocessor (4, uC) configured to adapt the electrical energy provided by the oscillator circuit dependent on a comparison of the measured electrical signal with a threshold.

The method further comprises the following steps:
- activating a threshold determining mode of the microprocessor (4, uC) starting upon the proximate powering up of the microprocessor; and
- in the threshold determining mode of the microprocessor (4, uC), determining the threshold automatically after the proximate powering up of the microprocessor (4, uC).

## Description

### FIELD OF THE INVENTION

The invention relates to a method for providing and controlling a charging device transferring energy to an electrical load of an inductively coupled household appliance, and a respective charging device. The electrical load can be a secondary battery of the electrical household appliance to be charged by transferring energy. The electrical household appliance might be a toothbrush, shaver or other device in particular suited for wet room use.

### BACKGROUND OF THE INVENTION

The EP 2 262 078 A1 describes a device and a method for an inductive energy transfer. The proposed circuit arrangement has a primary oscillator circuit for generating and radiating the magnetic alternating field to a winding. The primary oscillator circuit is provided with a coil element and a capacitor element. An active element is provided, by which the oscillator circuit supplies electrical energy. The oscillator circuit with has a circuit element, where the active resistance of the oscillator circuit is changed for adjustment of energy input. The adjustment of the energy input is performed based on a measured value which is prepared and compared with a fixed threshold in a comparator element. If the fixed threshold is exceeded or underrun, the amplitude of the oscillator will be reduced or enhanced. A major problem of this solution is that tolerances of the used electronic elements influence the value of the threshold. In order to avoid a calibration of the electronic circuit of each charger device, expensive electronic elements with low tolerances and an elaborated mechanical arrangement of the electronic elements in the device have to be used. Calibration is difficult in particular for inductive charging devices, as the casing of the circuit is encapsulated, e.g. by injection molding. After injection molding, the circuit is not accessible for further calibration. On the other hand, injection molding around the electronic elements of the electrical circuit does influence the inductance properties of the oscillator circuit, and thus the value of the threshold.

### SUMMARY OF THE INVENTION

It is an object of the present invention to provide a charging device and a method for providing and controlling the charging device allowing higher tolerances for the electronic components of the electric circuit and their mechanical arrangement in the circuitry.

This object is solved by the present invention with the method according to claim 1 and the charging device according to claim 12. According to the proposal, the circuitry of the charging device comprises
- an oscillator circuit having at least one output power coil element and one capacitor element;
- an electrical power source, e.g. an AC/DC converter connectable to the mains;
- a power switching element feeding the oscillator circuit with electrical power;
- a sensor element for determining an electrical signal value indicative of the inductance of the oscillator circuit;
- a microprocessor configured to adapt the electrical energy provided by the oscillator circuit dependent on a comparison of the measured electrical signal with a threshold.

In line with the proposal, a threshold determining mode of the microprocessor starting upon the proximate powering up of the microprocessor is activated and, in the threshold determining mode of the microprocessor, after the proximate powering up of the microprocessor the threshold is automatically determined. Thus, between activating the threshold determining mode and determining the threshold, the circuitry of the charging device might be encapsulated such that the microprocessor is not accessible from the outside for setting the threshold via a user interface input. Not accessible from the outside means, that it is not possible to input any threshold value into the microprocessor after the respective calibration step. The encapsulation of the microprocessor might be performed by water tightly surrounding the electrical circuitry of the charging device with a closed casing, e.g. by injection molding of the device casing around the circuitry. Controlling the charging device comprises in particular setting the threshold for adaption of the electrical energy provided by the oscillator circuit.

### BRIEF DESCRIPTION OF THE DRAWINGS

Fig. 1 shows schematically a block diagram for controlling an inductive charging device according to the prior art.
Fig. 2 shows, in contrast, schematically a block diagram for controlling an inductive charging device according to an embodiment of the proposal.
Fig. 3 shows schematically an example for a circuitry of a charging device according to an embodiment of the proposal.

### DETAILED DESCRIPTION OF THE INVENTION

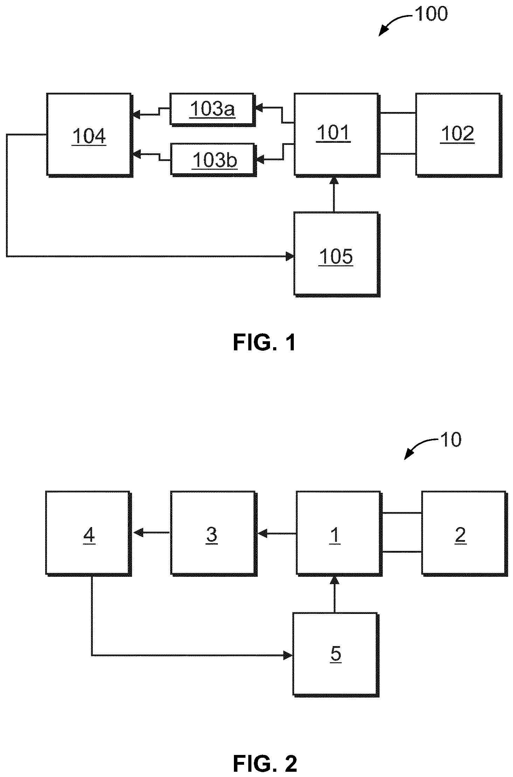

Before describing advantageous embodiments of the invention related to the Fig. 1 to 3, different aspects of the invention are described more in detail. These aspects disclose further features, advantages and possibilities of use of the present invention that might be combined in any useful combination. All features described and/or shown in the drawings are subject matter of the invention, irrespective of the grouping of the features in the claims and/or their back references.

The proposed charging device transferring energy to an electrical load of an inductively coupled household appliance (inductive charging device) has a circuitry comprising
- an oscillator circuit having at least one output power coil element and one capacitor element;
- an electrical power source, e.g. an AC/DC converter connectable to the mains;
- a power switching element feeding the oscillator circuit with electrical power;
- a sensor element for determining an electrical signal value indicative of the inductance of the oscillator circuit;
- a microprocessor configured to adapt the electrical energy provided by the oscillator circuit dependent on a comparison of the measured electrical signal with a threshold.

The threshold is used for determining the presence of an inductively coupled electrical household appliance. If an electrical household appliance is present, the electrical energy provided by the charging device might be increased, e.g. for charging a secondary battery as electrical load inductively coupled to the oscillator circuit of the charging device. If in the other case no electrical load is coupled the charging device, the electrical power provided by the charging device has to be switched off or drastically reduced in order to fulfill product requirements during the stand-by mode. Typically, the charger device might be continuously connected to the mains, and the household appliance might be disposed in the charger device for charging the secondary battery via an inductive coupling. Thus, a reliable detection of the presence is necessary in order to reduce the power consumption of the charging device if the household electrical appliance is not inductively coupled and charged. The electrical power of the oscillator might be changed by adapting the amplitude of the oscillator circuit using a changeable active resistance of the oscillator circuit.

The specific value of the threshold depends on the actual electric properties of each device, in particular the electric tolerances and the tolerances in the arrangement of the components in the circuitry. In particular relevant are the electric components of oscillator circuit including the sensor elements for determining the electrical signal value indicative of the inductance of the oscillator circuit and/or a changeable active resistance of the oscillator circuit.

By determining an individual threshold during production, further a higher signal-to-interference ratio regarding disturbing signals can be achieved allowing faster reaction of the microcontroller to power requirements due to a more precise threshold.

More specifically, the microprocessor of the charging device might be adapted to perform the follow method steps in line with the proposal when determining the threshold in the threshold determining mode after a proximate powering up:
(1) recording a first electrical signal value determined by the sensor element indicative of one of the states of the electrical household appliance inductively coupled or not coupled to the charging device;
(2) detecting a change in the electrical signal value determined by the sensor element by comparing the actual electrical signal with the recorded first electrical signal value;
(3) recording a second electrical signal value determined by the sensor element different form the recorded first electrical signal value indicative of the other of the states of the electrical household appliance inductively coupled or not coupled to the charging device;
(4) calculating the threshold based on the recorded first and second electrical signal values for distinguishing the states of the electrical household appliance inductively coupled and not inductively coupled to the charging device;
(5) storing the threshold and terminating the threshold determining mode.

The electrical signal is according to the proposal for example a voltage and/or current signal of the oscillating circuit, and the sensor element is according to the proposal for example an analog-to-digital converter converting the electrical signal tapped at a defined measuring point in the oscillator circuit into an electrical signal value for use in the microprocessor, in particular for determining the threshold and comparing an actual electrical signal value. After the threshold has been stored, this threshold might be used to decide whether the household electrical appliance is inductively coupled to the charger circuit or not. Based on this decision, the amplitude of the oscillator circuit might be reduced or enhanced for adapting of the electrical energy provided by the oscillator circuit.

The threshold determining mode of the microprocessor might be activated during production the (inductive) charging device using an electrically leading connection to the microprocessor in the circuitry available only during production before encapsulating the circuitry in a casing of the charging device. For example, for activating the threshold determining mode, a certain microprocessor input port might be supplied with a voltage signal or pulse.

The encapsulation might be performed e.g. by molding the casing around the circuitry to achieve water tight sealing of the circuitry in the charging device. Thus, the charging device is well suited for wet room use. Forming or molding the casing around the circuitry changes the inductance of the oscillator circuit, in particular the coupling factor of the output power coil element of the charger device to a receiving power coil element of the household appliance (with the electrical load). With the proposal, it is possible to calibrate the charging device after having completed the electronic and mechanic assembly of the device, even if the microprocessor is not accessible for an external input of further parameters.

Further, using lower prized components generally leads to large range tolerances of the electric and electronic components in the circuitry between one and the other specific device. With the proposal it is possible to tolerate larger tolerances.

The threshold determining mode of the microprocessor might alternatively and/or additionally be activated by inductively coupling an electrical load to the oscillator circuit according to a time and/or magnitude pattern, the time and/or magnitude pattern being recognized by microcontroller monitoring the electrical signal value determined by the sensor element. Such actuation of the threshold for determining mode allows starting calibration in entirely mounted charging device, even if no leading electrical interface is accessible to the microprocessor. This might be used for re-calibration of the device, i.e. a reset.

In line with the proposal, the pattern to be recognized by the microcontroller comprises detecting an electrical signal value higher than a reset threshold and/or a defined time pattern for the monitored actual electrical signal value passing over defined thresholds. The reset threshold might be set higher than a recordable first and second electrical signal value obtainable through coupling of the household electric appliance considering the possible tolerances. Such a reset threshold might be a value experimentally determined and/or calculated during device development and fixed in the device during production. The threshold might be defined as allowed range of values. Passing over defined thresholds in a defined time pattern means changing with the actual electrical signal value above and below the defined threshold in predetermined time periods, wherein the time pattern might comprise a defined cyclic behavior. The threshold might be a calculated threshold for detecting a coupled household appliance. In this case a household appliance might be used to generate the time pattern. In case of a the reset threshold higher than the calculated threshold, a specific reset device might be used.

The advantage of this feature is that a reset and re-calibration of charging device is possible. Further, there is no need to activate the threshold determining mode during production before encapsulating the device. Passing over a reset threshold different from the calculated threshold for detection of the inductive coupling of a household appliance might require a special reset device adapted to generate inductances leading to high electrical signal values and/or time pattern of these values, i.e. a certain receiving power coil element and/or load in the reset device.

According to the proposal, the calculated and/or the reset threshold are stored in a non-volatile memory of the microprocessor or circuitry, such as an EEPROM/FLASH segment of the microprocessor. This ensures that the determined thresholds are secured irrespective of a power supply of the microprocessor or circuitry of the charging device.

In order to confirm that the threshold has been set and the threshold determining mode is finished, it can be provided in line with the proposal that the microprocessor is adapted to generate a signal indicative that the threshold has been calculated and stored before terminating the threshold determining mode. This is useful during production in order to have a quality control in the production process.

In one embodiment this confirmation signal (indicative that the threshold has been calculated and stored) comprises switching off and on the power switching element of the oscillator circuit according to a predetermined time pattern. Such pattern might be detected with a threshold setting tool to be inductively coupled with the charging device. The threshold setting tool can be a household electrical appliance (as intended for the charging device) or any other appliance inductively coupleable with the charging device. The appliance has a microcontroller being adapted to detect the transfer of energy according to this predetermined time pattern. Further, the microcontroller of the appliance might be adapted to send a confirmation signal, e.g. an optical, acoustical and/or receivable radio signal (such as a Bluetooth signal).

After setting the threshold as described before, the method for controlling the charging device might comprise according to the proposal the step that the charging device is switched off when the actual electrical signal value underruns the threshold, wherein a timing element is used to switch on the charging device periodically to determine the actual electrical signal value and to compare it with the threshold, and wherein the charging device is switch off again if the actual electrical signal value is still below the threshold. This feature minimizes the stand-by power consume of the charging device.

The time period of the timing element (periodicity of switching on the charging device for determining the actual electrical signal value) can simply be adjusted to adapt the stand-by power consumed by the charging device to a desired value. The power consumed for switching on the charging device, for determining the actual electrical signal value and for comparing it with the threshold is averaged with the switched-off time of the charging device without energy consumption. The obtained (averaged) stand-by power consumed by the device can thus be adjusted to any desired value by prolonging or shortening the time period, i.e. adjusting the periodicity.

In line with the proposed method the electrical signal value measured or tapped in the oscillator circuit is a collector voltage of a transistor used as power switching element, the collector of the transistor being connected to the output power coil element. The voltage measured at the terminal of the power switching element (collector of the transistor) is easy to measure and indicative of the inductance of the oscillator circuit. The tapped voltage, or in general the tapped electrical signal, might be level shifted in order to shift the signal level of the electrical signal value to a range suited for a converting analog-to-digital converter (ADC) which might be integrated into the microprocessor.

The proposal also refers to a charging device as described before having a circuitry with an oscillator circuit, an electrical power source, a power switching element feeding the oscillator circuit with electrical power, a sensor element for determining an electrical signal value indicative of the inductance of the oscillator circuit and a microprocessor configured to adapt the electrical energy provided by the oscillator circuit dependent on a comparison of the measured electrical signal with a threshold. The microprocessor is further adapted to perform the method as described before or parts thereof.

The power switching element might be a transistor connected with its collector to the oscillator circuit between the power coil element and the capacitor element, with its emitter to a changeable active resistance of the oscillator circuit and with its base to a voltage divider with the at least two resistors and between e.g. the device voltage supply VCC and ground or any other voltage levels.

Further, the changeable active resistance can comprise a transistor connected between ground and a resistor and a coil connected in series to the emitter of the transistor used as power switching element, the transistor of the changeable active resistance being switchable by the microprocessor to adapt the electrical energy provided by the oscillator circuit dependent on a comparison of the measured electrical signal with the threshold.

In line with the proposal, the complete circuitry of the charging device might be water tightly molded into the casing of the charging device such that the circuitry has no electrically leading connection to the outside of the casing except for the mains. This is a safety feature necessary or advantageous for wet room use of such devices.

In the following, example embodiments according to the proposal are described with reference to the figures.

Figure 1 shows a schematic block diagram of an inductive charging device 100. The known charging device 100 comprises an oscillator circuit 101 including an output power coil element 102 to be coupled with a respective (receiving power) coil element of an electrical household appliance having e.g. secondary batteries to be charged by the charging device. The electrical household appliance is not displayed in figure 1.

In the oscillator circuit 101, the peak value and/or mean value indicators of the inductance of the oscillator circuit 101 are tapped and processed in level shifters 103a and 103b to adapt eventually too high peak or mean values to the operating input of a following comparator 104. The process values are forwarded to input ports of the comparator 104. The comparator 104 compares the input values with fixed thresholds to decide, whether a load of the household electrical appliance is inductively coupled to the output power coil element 102. The comparator 104 creates an output signal dependent on the result of the comparison and actuates a switch 105 acting on the oscillator circuit 101 to change the electrical power provided by the oscillator circuit 101.

The switch 105 might be used to switch the changeable active resistance of the oscillator circuit to adapt the amplitude of the oscillators circuit 101.

The problem with this solution according to the prior art is that the comparator is working with fixed thresholds that are not able to take into account tolerances of the electric components and of the arrangement of the components in the circuit.

Figure 2 shows schematically a solution according to the proposal. In a similar way, the charging device 10 comprises an oscillator circuit 1 with an output power coil element 2 and a switch 5 for adapting of the electrical energy provided by the oscillator circuit 1. In the oscillator circuit 1, an electrical signal indicative of the inductance of the oscillator circuit 1 is tapped and - optionally - processed in a level shifter 3. The processed electrical signal is then forwarded to an analog digital converter (ADC) of a microprocessor 4 with and integrated analog digital converter (ADC), a memory and a timing element working as the time base for the circuitry.

In the microprocessor 4, the processed electrical signal is converted to a digital electrical signal value and compared with a threshold to decide, whether the household appliance is inductively coupled to the oscillating circuit 1. Based on this decision, the electrical energy provided by the oscillator circuit is adapted to provide a high output (in case of a coupled appliance) or a low output (in case of no coupled appliance). Accordingly, switch 5 has the same function as switch 105 described in figure 1 with respect to the prior art.

In line with the proposal, the comparator 104 as disclosed in the prior art has been replaced by a microprocessor 4 for determining a digital electrical signal value indicative if of the inductance of the oscillator circuit 1 and for actuating switch 5 dependent on the determined electrical signal value in comparison with the threshold.

The threshold is determined by the microprocessor 4 using the following steps:
(1) recording a first electrical signal value determined by the sensor element indicative of one of the states of the electrical household appliance inductively coupled or not coupled to the charging device
(2) detecting a change in the electrical signal value determined by the sensor element by comparing the actual electrical signal with the recorded first electrical signal
(3) recording a second electrical signal value determined by the sensor element different form the recorded first electrical signal indicative of the other of the states of the electrical household appliance inductively coupled or not coupled to the charging device;
(4) calculating the threshold based on the recorded first and second electrical signal values for distinguishing the states of the electrical household appliance inductively coupled and inductively not coupled to the charging device;
(5) storing the threshold and terminating the threshold determining mode.

Accordingly, the threshold is not set fixedly in the circuitry using a comparator with a fixed threshold value, but by calibrating the charging device with the actual electronic components in the actual mechanical arrangement of the components within the device housing. The threshold might be calculated as the mean value of the first and the second electrical signal value, or based on any other suited algorithm for determining a suited threshold. The algorithm might be chosen by the one skilled in the art based on the requirements of the case.

The calculated threshold is stored in a non-volatile memory of the microprocessor 4. This threshold is then used, as described before, for switching the amplitude of the oscillator circuit 1 between high and low value in order to adapt the electrical energy provided by the oscillator circuit.

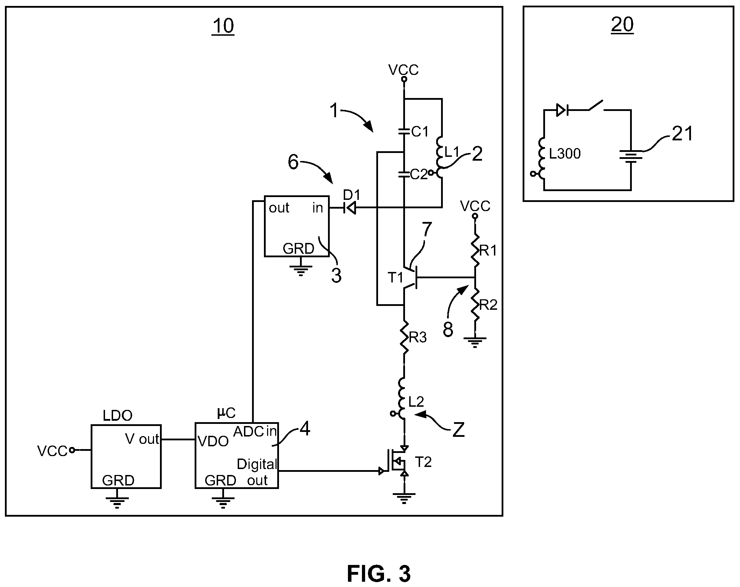

Figure 3 shows a typical circuitry of the charging device 10 according to the proposal by way of an example, together with a household appliance 20 electrically coupled to the charging device.

The circuitry of the charging device 10 comprises the oscillator circuit 1 having one output power coil element 2 with the coil or inductivity L1 and the capacitor elements C1 and C2 connected in series with each other. The circuitry further has an electrical power source (not shown) connected to the mains for providing a supply voltage VCC two the circuitry of the charging device 10. For the supply of the microprocessor 4, uC, a low-dropout regulator (LDO) might be provided for regulating the supply voltage VCC to an output voltage VDO used for the supply of the microprocessor.

As power switching element 7 for feeding the oscillator circuit 1, a transistor T1 is provided. The transistor T1 is connected with its collector to the oscillator circuit between the power coil element 2, L1 and the capacitor element C2, with its emitter to a changeable active resistance Z of the oscillator circuit 1 comprising a resistor R3 and an a coil L2 and with its base to a voltage divider with the at least two resistors R1 and R2 between the device voltage supply VCC and ground.

The changeable active resistance Z comprises a transistor T2 connected between ground and a pair of a resistor R3 and a coil L2 connected in series to the emitter of the transistor T1 used as power switching element 7. The transistor T2 of the changeable active resistance Z is switchable by the microprocessor uC to adapt the electrical energy provided by the oscillator circuit 1 dependent on a comparison of the measured electrical signal with the threshold.

The energy is transferred by the oscillator circuit 1 from the coil L2 to a coil L300 of the circuitry of the household appliance 20 having as the load of the household appliance 20 of secondary battery 21 connected to the coil L300 for charging the secondary battery 21.

For testing if the coil L300 is inductively coupled to the coil L1 of the oscillator circuit 1, a sensor element 6 is provided for determining an electrical signal value indicators of the inductance of the oscillator circuit 1. The inductance of the oscillator circuit 1 changes with the coil L300 inductively coupled to the coil L1 of the oscillator circuit 1.

The electrical signal value measured in the oscillator circuit 1 is a collector voltage of a transistor T1 used as power switching element 7, the collector of the transistor T1 being connected to the output power coil element 2 (i.e. the coil L1). The signal level of this electrical signal is shifted in a level shifter 3 into a signal range that can be directly input into and an analog-to-digital converter integrated into the microprocessor uC.

The measured electrical signal value is used for both, calculating the threshold and for adapting the electrical energy provided by the oscillator circuit dependent on a comparison of the measured electrical signal well you with the threshold. This has already been described in detail.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Method for controlling a charging device (10) transferring energy to an electrical load of an inductively coupled household appliance (20), the circuitry of said charging device (10) comprising
- an oscillator circuit (1) having at least one output power coil element (2, L1) and at least one capacitor element (C1, C2);
- an electrical power source;
- a power switching element (7, T1) feeding the oscillator circuit with electrical power;
- a sensor element (6) for determining an electrical signal value indicative of the inductance of the oscillator circuit (1);
- a microprocessor (4, uC) configured to adapt the electrical energy provided by the oscillator circuit dependent on a comparison of the measured electrical signal with a threshold;
**characterized in that** the method comprises the following steps:
- activating a threshold determining mode of the microprocessor (4, uC) starting upon the proximate powering up of the microprocessor; and
- in the threshold determining mode of the microprocessor (4, uC), determining the threshold automatically after the proximate powering up of the microprocessor (4, uC).

2. The method according to claim 1, **characterized in that** the method comprises the following steps:
(1) recording a first electrical signal value determined by the sensor element (6);
(2) detecting a change in the electrical signal value determined by the sensor element (6);
(3) recording a second electrical signal value determined by the sensor element (6) different form the recorded first electrical signal value;
(4) calculating the threshold based on the recorded first and second electrical signal values for distinguishing the states of the electrical household appliance (20) inductively coupled and inductively not coupled to the charging device (10);
(5) storing the threshold and terminating the threshold determining mode.

3. The method according to claim 1 or 2, **characterized in that** the threshold determining mode of the microprocessor (4, uC) is activated during production the charging device (10) using an electrical interface to the microprocessor (4, uC) in the circuitry available only during production before encapsulating the circuitry in a casing of the charging device (10).

4. The method according to any one of the preceding claims, **characterized in that** the threshold determining mode of the microprocessor (4, uC) is activated by inductively coupling an electrical load to the oscillator circuit according to a time and/or magnitude pattern, the time and/or magnitude pattern being recognized by microcontroller (4, uC) monitoring the electrical signal value determined by the sensor element (6).

5. The method according to claim 4, **characterized in that** the pattern to be recognized by the microcontroller (4, uC) comprises a detecting an electrical signal value higher than a reset threshold and/or a defined time pattern for the monitored actual electrical signal value passing over defined thresholds.

6. The method according to any of the preceding claims, **characterized in that** the threshold is stored in a non-volatile memory of the microprocessor (4, uC) or circuitry, such as an EEPROM/FLASH segment of the microprocessor (4, uC).

7. The method according to any of the preceding claims, **characterized in that** the microprocessor (4, uC) is adapted to generate a signal indicative that the threshold has been calculated and stored before terminating the threshold determining mode.

8. The method according to claim 7, **characterized in that** the signal comprises switching off and on the power switching element (7) of the oscillator circuit (1) according to a predetermined time pattern.

9. The method according to any of the preceding claims, **characterized in that** charging device (10) is switched off when the actual electrical signal value underruns the threshold, wherein a timing element is used to switch on the charging device (10) periodically to determine the actual electrical signal value and to compare it with the threshold, and wherein the charging device (10) is switched off again if the actual electrical signal value is still below the threshold.

10. The method according to claim 9, **characterized in that** the time period of the timing element is adjusted to adapt the stand-by power consumed by the charging device (10) to a desired value.

11. The method according to any of the preceding claims, **characterized in that** the electrical signal value measured in the oscillator circuit (10) is a collector voltage of a transistor (T1) used as power switching element (7), the collector of the transistor (T1) being connected to the output power coil element (2, L1).

12. Charging device transferring energy to an electrical load (21) of an inductively coupled household appliance (20), the circuitry of said charging device (10) comprising
- an oscillator circuit (1) having at least one output power coil element (2, L1) and one capacitor element (C1, C2);
- an electrical power source ;
- a power switching element (7, T1) feeding the oscillator circuit (1) with electrical power;
- a sensor element (6) for determining an electrical signal value indicative of the inductance of the oscillator circuit (1);
- a microprocessor (4, uC) configured to adapt the electrical energy provided by the oscillator circuit (1) dependent on a comparison of the measured electrical signal with a threshold;
**characterized in that** the microprocessor (4, uC) is adapted to perform the method as claimed in any of the preceding claims 1 to 11.

13. Charging device according to claim 12, **characterized in that** the power switching element (7) is a transistor (T1) connected with its collector to the oscillator circuit (1) between the power coil element (2, L1) and the capacitor element (C2), with its emitter to a changeable active resistance (Z) of the oscillator circuit (1) and with its base connected to a voltage divider (8) with the at least two resistors (R1) and (R2) between the device voltage supply (VCC) and ground.

14. Charging device according to claim 13, **characterized in that** the changeable active resistance (Z) comprises a transistor (T2) connected between ground and a pair of a resistor (R3) and a coil (L2) connected in series to the emitter of the transistor (T1) used as power switching element (7), said transistor (T2) of the changeable active resistance (Z) being switchable by the microprocessor (7, uC) to adapt the electrical energy provided by the oscillator circuit (1) dependent on a comparison of the measured electrical signal with the threshold.

15. Charging device according to any one of the claims 12 to 15 that the circuitry of the charging device (10) is water tightly molded into a casing of the charging device (10).
